# EUROPÄISCHE PATENTSCHRIFT

(11) **EP 3 650 719 B1**
(45) Veröffentlichungstag und Bekanntmachung des Hinweises auf die Patenterteilung: **20.04.2022**
(21) Anmeldenummer: 19202676.3
(22) Anmeldetag: 11.10.2019
(51) Int. Cl.: F16C 11/06, B60H 1/34

(54) **LAGERANORDNUNG, KUGELGELENKLAGER UND ANORDNUNG MIT EINER LAGERANORDNUNG UND MINDESTENS EINEM KUGELLAGER**
BEARING ARRANGEMENT, BALL-AND-SOCKET JOINT BEARING AND ARRANGEMENT WITH A BEARING ARRANGEMENT AND AT LEAST ONE BALL BEARING
DISPOSITIF PALIER, PALIER À JOINT À ROTULE ET DISPOSITIF POURVU D'UN DISPOSITIF PALIER ET D'AU MOINS UN PALIER À BILLES

(30) Priorität: 16.10.2018 DE 102018125619
(43) Veröffentlichungstag der Anmeldung: 13.05.2020
(60) Teilanmeldung: 21153515.8
(73) Patentinhaber: Dr. Schneider Kunststoffwerke GmbH, 96317 Kronach-Neuses (DE)
(72) Erfinder: Kamm, Daniel, 96264 Altenkunstadt (DE); Buss, Alexander, 95352 Marktleugast (DE); Löffler, Michael, 96524 Oerlsdorf (DE)

(56) Entgegenhaltungen:
- EP-A1- 0 308 777
- EP-A2- 0 884 489
- WO-A1-95/33139
- WO-A1-2018/127321
- CN-U- 206 374 514
- DE-A1- 1 625 581
- DE-A1- 2 420 241
- DE-A1- 2 421 293
- DE-A1-102013 209 493
- DE-B- 1 196 434
- DE-U1- 8 314 774
- GB-A- 838 095
- JP-A- 2012 206 570
- JP-U- S63 195 116
- US-A- 57 061
- US-A- 4 360 284
- US-A1- 2017 341 488

## Beschreibung

Es werden eine Lageranordnung und eine Anordnung mit einer Lageranordnung beschrieben. Eine solche Anordnung ermöglicht im Zusammenspiel mit einem Kugelgelenklager die Übertragung einer Drehbewegung über eine Koppelstange.

Derartige Anordnungen werden beispielsweise bei Kraftfahrzeugen im Bereich der Innenausstattung für Luftausströmer eingesetzt. Bei Luftausströmern sind häufig Bedienräder vorgesehen, die zum Verschwenken von Luftleitelementen oder Luftklappen zur Steuerung der Menge der zugeführten Luft dienen.

Luftausströmer dienen zum Ausgeben und zur Ablenkung von Luft, die von einer Klimaanlage oder einer anderen Belüftungseinrichtung zur Verfügung gestellt wird. Luftausströmer werden bei Fahrzeugen eingesetzt, um Frischluft, temperierte Luft und/oder klimatisierte Luft in den Fahrgastraum eines Fahrzeugs zu bringen. Fahrzeuge können bspw. Kraftfahrzeuge, wie PKW, LKW oder Busse, Züge, Flugzeuge oder Schiffe sein. Bei Luftausströmern kann in der Regel neben der Steuerung der Ablenkung von ausgegebener Luft, bspw. von einer Klimaanlage, auch die Menge an ausgegebener Luft geregelt werden. Die Menge der zugeführten Luft wird über eine Steuereinrichtung geregelt, die bspw. mit einer Bedieneinrichtung zum Verschwenken von Lamellen oder getrennt von einer solchen Bedieneinrichtung neben einer Ausströmöffnung angeordnet ist. Luftausströmer können in einem Fahrzeugarmaturenbrett oder im Bereich der A-, B- oder C- Säule oder am Dach eines Kraftfahrzeuges angeordnet sein.

### Stand der Technik

Im Bereich der Luftausströmer bei Kraftfahrzeugen wird über ein Bedienrad häufig eine Schließklappe zur Regelung der Menge an zugeführter Luft verschwenkt. Die Übertragung der Drehbewegung des Bedienrads auf einen Hebel, der mit der Schließklappe gekoppelt ist, erfolgt in der Regel über eine Koppelstange. Die Koppelstange weist hierzu Lagerkugeln auf, die in Lagerstellen des Bedienrads und des Hebels aufgenommen sind. Die aus dem Stand der Technik bekannten Anordnungen mit einem Kugelgelenklager und Lagerkugeln an der Koppelstange sind jedoch im Hinblick auf die auftretenden Toleranzen bei der Fertigung und eine spielfreie Lagerung nur unzureichend ausgebildet.

So offenbart beispielsweise DE 10 2009 051 297 A1 die Lagerung eines drehbaren Bedienelements an einem Luftausströmer mit einem Kugelgelenk, das aus einem Kugelsegment und einer Kugelpfanne besteht. Das Kugelsegment ist am Gehäuse und die Kugelpfanne am Bedienrad angeformt, wobei das Kugelsegment bedienradseitig mit zwei koaxial ausgebildeten Ansätzen versehen ist, die in Richtung der Längserstreckung des Gehäuses gegenüberliegend angeordnet sind. Die Ansätze weisen in Richtung einer Lagerachse einen Abstand von etwa 0,2 mm zu einer inneren Grundfläche der Kugelpfanne auf und bilden einen Anschlag für diese. Die Kugelpfanne selbst ist aus vier koaxial angeordneten, elastisch aufspreizbaren Pfannensegmenten mit kugelförmiger Kugelfläche gebildet. Durch die Ausbildung kann das Bedienrad um etwa 2° gegenüber der Normalen zur Lagerachse gekippt werden, worüber ein geringer Toleranzausgleich bereitstellt wird.

Die Ausführung ist jedoch nur bedingt auf andere Ausführungen anwendbar und ermöglicht lediglich eine Auslenkung um 2° gegenüber der Normalen zur Lagerachse. Das bedeutet, dass für größere Abweichungen keine Lösung bereitgestellt wird, da es dann zu einem unkontrollierten Verkippen kommen könnte. Im Weiteren wird kein Spielausgleich hierüber erreicht.

Die WO 2018 / 127 321 A1 und die DE 10 2013 209 493 A1 offenbaren Kugelgelenke, bestehend aus einem Gelenkkopf und einer Gelenkpfanne. Der Gelenkkopf ist auf einem Schaft angeordnet, welcher Teil eines Hebels oder einer Stange ist. Auf der dem Schaft gegenüberliegenden Seite des Gelenkkopfs ist ein pilzförmiges Element angeordnet. Dieses pilzförmige Element ragt hinterschnittig durch eine Öffnung in der Gelenkpfanne und verhindert ein unbeabsichtigtes Lösen des Kugelgelenks.

Aus dem Stand der Technik sind keine Anordnungen bekannt, die eine spielfreie und toleranzausgleichende Übertragung der Drehbewegung eines Bedienrads auf einen Hebel angeben. Die bekannten Ausführungen ermöglichen lediglich in einem geringen Bereich Toleranzschwankungen auszugleichen. Eine Möglichkeit der Ausrichtung einer Koppelstange gegen ein Abkippen und einer automatischen Zentrierung in den Lagerstellen ist aus dem Stand der Technik nicht bekannt.

### Aufgabe

Es besteht daher die Aufgabe darin die Übertragung einer Drehbewegung über eine Lageranordnung anzugeben, wobei die Funktion der Anordnung aufrechterhalten wird, indem ein Abkippen einer Koppelstange verhindert wird und die Lagerstellen automatisch zentriert werden. Zudem sollen die Schnittstellen der Komponenten einer Schließklappensteuerung, welche zwischen einer Koppelstange und Verbindungsstellen von weiteren Komponenten bestehen, neben einer spielfreien Lagerung, zum Beispiel zur Vermeidung einer Geräuschentwicklung, eine möglichst kleine resultierende Kraft und damit Krafttoleranz auf eine Betätigungskraft aufweisen.

Zudem soll eine Lösung angegeben werden, die robust gegenüber unsachgemäßem Umgang während des Transports, während der Montage und im Einsatz ist, einen Winkelausgleich von nicht koaxial ausgerichteten Drehachsen eines Bedienrads und einer Schließklappe bereitstellt, eine prozesssichere Auslegung ermöglicht und einen abstimmfreien Aufbau gewährleistet.

Die genannten Anforderungen sollen gleichzeitig mit Fertigungstoleranzen erfüllt werden, die innerhalb eines fertigungstechnisch nicht zu eng liegenden Rahmen liegen.

### Lösung

Die vorstehend genannte Aufgabe wird durch eine Lageranordnung mit den Merkmalen des Anspruchs 1 gelöst. Die Lageranordnung weist mindestens einen ersten Verbindungsabschnitt auf, wobei der mindestens eine erste Verbindungsabschnitt eine Lagerkugel aufweist und sich von der Lagerkugel eine Erweiterung erstreckt, die auf der der Lagerkugel zugewandten Seite flach und auf der gegenüberliegenden, der Lagerkugel abgewandten Seite, abgerundet ausgebildet ist.

Die Erweiterung an der Lagerkugel stellt eine Sicherung gegen ungewolltes Ausrasten nach der Aufnahme der Lagerkugel in einem entsprechenden Kugelgelenklager bereit. Die Erweiterung bietet zudem den Vorteil, dass ein Winkelausgleich von nicht koaxialen Drehachsen eines Bedienrads und einer Schließklappe erreicht werden kann, ohne dass es zu einem Herausgleiten oder "Herausspringen" der Lagerkugeln kommt. Die Erweiterung verhindert ein Heraustreten der Lagerkugel.

Die Lageranordnung kann sowohl an einer Koppelstange als auch an einem Bedienrad und/oder einem Hebel einer Schließklappensteuerung angeordnet sein. Die Lageranordnung kann in weiteren Ausführungen auch zwei Verbindungsabschnitte aufweisen, die jeweils eine Lagerkugel aufweisen. Darüber hinaus kann die Lageranordnung in noch weiteren Ausführungen weitere Verbindungsabschnitte mit jeweils einer Lagerkugel aufweisen.

Die Lagerkugel weist zwischen einer die Lagerkugel schneidenden Mittelebene und einem gegenüberliegenden Ende mindestens drei Abschnitte (I., II., III.) auf, welche einen zur Mittelebene hin zunehmenden Durchmesser aufweisen, wobei die mindestens drei Abschnitte einen nicht homogenen Verlauf über die komplette Oberfläche der Lagerkugel bereitstellen. Eine normale Kugel weist an ihrer Oberfläche einen homogenen Verlauf mit einer konstanten Krümmung auf. Die Lagerkugel mit den mindestens drei Abschnitten weist demgegenüber keinen homogenen Verlauf auf, sondern bildet über die Abschnitte hinweg eine Rinne aus. Die Abschnitte weisen Übergänge mit einer Krümmung bzw. Radius auf, die/der kleiner bzw. größer ist als die Krümmung bzw. der Radius der Kugel. Zudem kann die Krümmung in umgekehrter Richtung erfolgen, so dass die Abschnitte selbst bspw. konkav ausgebildet sind, wobei die Kugel selbst eine konvexe Krümmung aufweist. Die Kontur der Lagerkugeln verhindert ein Abkippen einer mit der Lageranordnung verbundenen Komponente (z.B. Koppelstange) entgegen des Schwerkrafteinflusses. Es wird darüber hinaus eine kontrollierte axiale Zentrierung bereitgestellt. Die Kontur der Lagerkugel stellt insbesondere einen Übergang zwischen steigenden Lagerstellendurchmessern bereit, wobei bei steigendem abweichenden Winkel der Lagerstellendurchmesser ansteigt.

Zwischen der Lagerkugel und der Erweiterung kann ein Abstand bestehen, sodass eine weitere Auslenkung der Lagerkugel vor allem bei nicht koaxial verlaufenden Drehachsen gewährleistet wird.

In weiteren Ausführungsformen kann die Erweiterung als Pilzkopf ausgebildet sein. Ein solcher Pilzkopf ermöglicht ein einfaches Einbringen in ein Kugelgelenklager und bietet über die flache Seite eine Arretierung gegenüber einem ungewollten Ausrasten.

Eine Koppelstange kann an den Endabschnitten jeweils einen Verbindungsabschnitt aufweisen. Im Weiteren können die Endabschnitte der Koppelstange versetzt zueinander in Längsrichtung verlaufen. Die Koppelstange ist dann beispielsweise besonders für Ausführungen geeignet, die nicht koaxial ausgerichtete Drehachsen aufweisen und/oder die Drehstellen eines Bedienrads und eines Hebels versetzt zueinander verlaufen. Es ist aber auch möglich Kugelgelenklager, wie nachfolgend beschrieben, an den Endabschnitten einer Koppelstange mit versetzten Endabschnitten vorzusehen. In noch weiteren Ausführungen kann ein Endabschnitt eine Lageranordnung mit einem ersten Verbindungsabschnitt und der andere Endabschnitt einer Koppelstange ein Kugelgelenklager aufweisen.

Der Lösung der Aufgabe zuträglich kann auchein Kugelgelenklager zur Aufnahme einer Lagerkugel sein, welches zwei parallel zueinander verlaufende und an einer Basis gefedert gelagerte Arme aufweist, wobei die Arme jeweils eine Ausbuchtung aufweisen, die gemeinsam eine Lagerstelle für eine Lagerkugel ausbilden, wobei die Lagerstelle mindestens zwei Paare gegenüberliegender Lagerflächen aufweist, die an den Armen im Bereich der Ausbuchtungen angeordnet sind, und wobei nach der Lagerstelle, abseits der Basis, ein Arm einen Bügel aufweist, der einen gegenüberliegenden Armabschnitt des anderen Arms umgibt.

Das Kugelgelenklager kann durch die beiden gefedert gelagerten Arme bereits einen Spielausgleich und einen Toleranzausgleich bereitstellen. Die Anordnung der gegenüberliegenden Paare von Lagerflächen kann mindestens vier Kontaktpunkte aufweisen, über welche eine Lagerkugel innerhalb der Lagerstelle aufgenommen werden kann. Die Lagerflächen der Paare von gegenüberliegenden Lagerflächen können vorzugsweise so ausgebildet sein, dass diese sich sowohl an den beiden Armen als auch an einer durch die Lagerstelle verlaufende Ebene gegenüberliegen, sodass bei zwei gegenüberliegenden Paaren von Lagerflächen im Wesentlichen eine Vierpunktlagerung oder bei drei gegenüberliegenden Paaren von Lagerflächen im Wesentlichen eine Sechspunktlagerung erreicht wird. Hierüber wäre ein weiterer Spielausgleich und Toleranzausgleich möglich.

Die Ausbildung des Bügels und des Armabschnitts können eine Sicherung gegen ein ungewolltes Ausrasten bereitstellen und beim Einrasten einer Lagerkugel eine zu starke Verformung des Kugelgelenklagers verhindern, um damit einer Beschädigung entgegenzutreten.

Die gefederte Ausführung der Arme kann zudem die Aufnahme von Lagerkugeln mit Durchmessern, die einen größeren Toleranzbereich aufweisen, ermöglichen. Der Bügel, welcher den Armabschnitt gegen ein zu weites Verlagern sichert, kann sogar die Aufnahme deutlich vergrößerter Lagerkugeln, ohne dass es zu einer Beschädigung des Kugelgelenklagers kommt, ermöglichen.

Die Fertigungstoleranzen für Lagerkugeln können daher weniger eng ausgelegt werden. Im Weiteren ist es nicht erforderlich, das Kugelgelenklager und die Lageranordnung durch häufige Werkzeugänderungen bei einem Spritzgussprozess anzupassen, wodurch die Kosten aufgrund der einfachen Ausführung und bei der Montage reduziert sind.

Der Bügel und der vom Bügel umgebene, innenliegende Armabschnitt können einen ersten Hinterschnitt in Gleitrichtung aufweisen, wobei die Gleitrichtung im Wesentlichen parallel zur Erstreckung des vom Bügel umgebenen Armabschnitts des innenliegenden Arms verläuft. Der erste Hinterschnitt wird durch Flächen am Bügel und am Armabschnitt gebildet, welche bei Kraftbeaufschlagung in Gleitrichtung aneinander liegen und damit die Verlagerung des Bügels relativ zum Arm in Gleitrichtung begrenzen. Dadurch wird ein Auseinandergleiten bei der Aufbiegung des Bügels und des Armabschnitts während der Montage verhindert.

Der Bügel und der vom Bügel umgebene innenliegende Armabschnitt können einen zweiten Hinterschnitt in Montagerichtung aufweisen, wobei die Montagerichtung parallel zur Öffnung durch die Lagerstelle verläuft. Der zweite Hinterschnitt wird durch gegenüberliegende Flächen am Bügel und am innenliegenden Armabschnitt gebildet. Bei der Montage wird so ein Abgleiten der Arme und des Bügels sowie des innenliegenden Armabschnitts in Montagerichtung verhindert, wodurch die Montage ohne zusätzliches Abstützen der beiden Arme gewährleistet wird. Das Einbringen einer Erweiterung und einer Lagerkugel einer Koppelstange führen daher nicht zu einer Beschädigung des Kugelgelenklagers.

Eine erste Lagerfläche eines Paares von gegenüberliegenden Lagerflächen kann an der Ausbuchtung eines ersten Arms und eine zweite Lagerfläche kann an der Ausbuchtung eines zweiten Arms angeordnet sein. Die gegenüberliegenden Lagerflächen eines Paares von Lagerflächen sind dabei so ausgebildet, dass diese jeweils auf verschiedenen Armen bzw. in den Ausbuchtungen der beiden Arme liegen und einander zugewandt sind.

Mindestens ein Paar von gegenüberliegenden Lagerflächen kann eine Erhebung aufweisen, die an der Ausbuchtung einer der Arme ausgebildet ist. Vorzugsweise kann ein Paar gegenüberliegender Lagerflächen zwei Erhebungen aufweisen, wobei jede der Erhebung an einer Ausbuchtung der gegenüberliegenden Arme angeordnet ist. Die Erhebungen sind so zueinander ausgerichtet, dass diese gegenüberliegende Anlageflächen bereitstellen. In weiteren Ausführungsformen ist die Lagerstelle so ausgebildet, dass die drei Paare von gegenüberliegenden Lagerflächen entsprechend so ausgebildet sind, dass die Paare gegenüberliegender Lagerflächen jeweils zwei Erhebungen aufweisen, die an den gegenüberliegenden Ausbuchtungen der beiden Arme angeordnet und aufeinander zu ausgerichtet sind. Durch die so ausgebildete Sechspunktlagerung wird auch ein Toleranz- und Spielausgleich für verschieden Lagerkugeln bereitgestellt. Die gefederte Anordnung der beiden Arme erlaubt zudem die Verwendung größerer Toleranzen bei der Herstellung von Kugelgelenklagern.

Im Weiteren kann ein Abstand zwischen dem innenliegenden Armabschnitt und dem Bügel bestehen, sodass durch die Auslenkung mindestens eines Arms ein zusätzlicher Toleranzausgleich gegeben ist. Die gefederten Arme können auseinander gedrückt werden, wobei die Größe der in der Lagerstelle aufgenommenen Lagerkugeln stärker variieren kann, als dies durch bekannte Ausführungen im Stand der Technik erreicht wird. Der Abstand zwischen dem Bügel und dem innenliegenden Armabschnitt kann entsprechend definieren, in wie weit ein Auseinandergleiten der Arme erfolgen darf.

Das Kugelgelenklager kann bspw. an einem Bedienrad und/oder einem Hebel einer Schließklappensteuerung angeordnet sein. In weiteren Ausführungsformen kann mindestens ein Kugelgelenklager auch an einer Koppelstange, vorzugsweise an einem Endabschnitt, angeordnet sein,

Die vorstehend genannte Aufgabe wird auch durch eine Anordnung mit einer Lageranordnung nach einer der vorstehend beschriebenen Varianten und mindestens einem Kugelgelenklager nach einer der vorstehend beschriebenen Varianten gelöst, wobei mindestens eine Lagerkugel der Lageranordnung in der Lagerstelle eines Kugelgelenklagers aufgenommen ist und die Lagerkugel an den Lagerflächen der Lagerstelle anliegt. Die Lageranordnung kann vorzugsweise auch zwei Lagerkugeln aufweisen, die an den entgegengesetzten Endabschnitten in einem ersten Verbindungsabschnitt und in einem zweiten Verbindungsabschnitt angeordnet sind (z.B. Koppelstange). Über den ersten Verbindungsabschnitt kann bspw. eine Koppelstange mit einem Hebel, der ein Kugelgelenklager aufweist, verbunden sein, wobei der Hebel mit einer Schließklappe verbunden ist. Ein Verschwenken des Hebels bzw. ein Verdrehen des Hebels um ein Lager des Hebels bewirkt dann ein Verschwenken der Schließklappe. Das Kugelgelenklager des Hebels befindet sich radial beabstandet zum Lager des Hebels.

Die Koppelstange kann über den zweiten Verbindungsabschnitt mit einem Bedienrad gekoppelt sein. Das Bedienrad weist ein Lager auf, um welches das Bedienrad drehbar gelagert ist. Zusätzlich weist das Bedienrad ein Kugelgelenklager auf, dass sich radial beabstandet zum Lager des Bedienrads befindet. An einer äußeren Umfangskante weist das Bedienrad einen Verstellabschnitt auf. Der Verstellabschnitt dient zum Verdrehen des Bedienrads. Die Kugelgelenklager des Bedienrads und des Hebels übertragen über die Koppelstange die Rotation des Bedienrads auf den Hebel, sodass ein Verdrehen des Bedienrads ein Verschwenken der Schließklappe bewirkt.

Die Ausbildung der Kugelgelenklager und der Lagerkugel der Koppelstange ermöglichen dabei einen Spielausgleich und einen Toleranzausgleich und verhindert ein Abkippen der Koppelstange entgegen des Schwerkrafteinflusses. Darüber hinaus wird eine kontrollierte axiale Zentrierung bereitgestellt, sodass es zu keiner Blockade kommen kann und damit die Funktion einer Schließklappensteuerung aufrechterhalten wird.

Bekannte Ausführungen aus dem Stand der Technik mit einer Lageranordnung und Kugelgelenklagern sind so ausgebildet, dass nur ein geringer Toleranzausgleich bereitgestellt wird. Dies macht für die bekannten Ausführungen aus dem Stand der Technik häufige Werkzeugänderungen erforderlich, die zur Abstimmung der Bauteile der Schnittstelle gemäß den geltenden Standards nötig sind. Die hierin beschriebene technische Lehre macht solche häufigen Werkzeugänderungen jedoch überflüssig. Dadurch können Zeit und vor allem Kosten eingespart werden. Auf häufige Werkzeugänderungen zur Abstimmung der Teile kann verzichtet werden.

Die Anordnung kann eine Koppelstange und mindestens ein Bedienrad und/oder einen Hebel aufweisen, wobei
- die Koppelstange mindestens eine Lageranordnung und das Bedienrad und/oder der Hebel mindestens ein Kugelgelenklager, oder
- die Koppelstange mindestens ein Kugelgelenklager und das Bedienrad und/oder der Hebel mindestens eine Lageranordnung aufweisen.

Die Bestandteile einer solchen Anordnung, Koppelstange, Kugelgelenklager sowie Bedienrad und Hebel, können aus Kunststoff bestehen und sind daher in einem Spritzgussprozess in hoher Stückzahl kostengünstig und schnell herstellbar. Zur Beeinflussung der mechanischen Eigenschaften der Bestandteile können dem Kunststoff bei der Herstellung Zusätze beigefügt werden und/oder verstärkende Einlegeteile verwendet werden.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine schematische Darstellung einer Anordnung, bestehend aus einer Koppelstange, einem Bedienrad und einem Hebel;
- Fig. 2: eine Seitenansicht auf die Anordnung von Fig. 1;
- Fig. 3: eine Draufsicht auf die Anordnung von Fig. 1;
- Fig. 4: eine schematische Darstellung der Koppelstange der Anordnung von Fig. 1;
- Fig. 5: eine Seitenansicht der Koppelstange von Fig. 4;
- Fig. 6: eine schematische Darstellung des Hebels der Anordnung von Fig. 1;
- Fig. 7: eine weitere Darstellung des Hebels der Anordnung von Fig. 1;
- Fig. 8: eine vergrößerte Darstellung des Kugelgelenklagers des Hebels von Fig. 6;
- Fig. 9: eine Schnittansicht des Hebels entlang der Schnittebene A-A von Fig. 6;
- Fig. 10: eine schematische Darstellung des Bedienrads der Anordnung vom Fig. 1; und
- Fig. 11: schematische Darstellungen einer Lagerkugel.

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

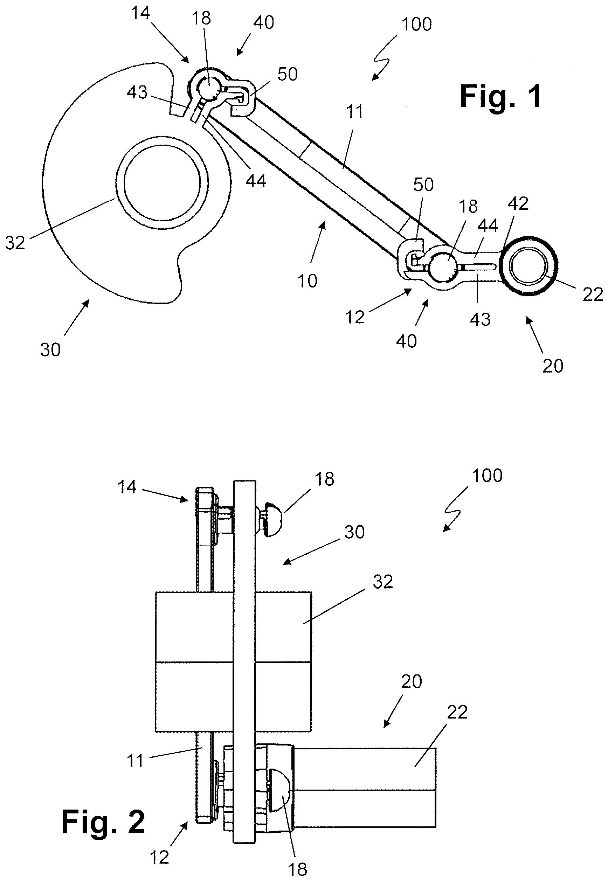

Fig. 1 zeigt eine schematische Darstellung einer Anordnung 100, bestehend aus einer Koppelstange 10, einem Bedienrad 30 und einem Hebel 20. Die Anordnung 100 dient zum Verstellen der Ausrichtung einer Schließklappe eines Luftausströmers in einem Fahrzeug. Hierzu ist der Hebel 20 über ein Lager 22 mit einem quer zur Schließklappe verlaufenden Abschnitt gekoppelt, der durch die Schwenkachse der Schließklappe verläuft. Das Lager 22 definiert dabei die Schwenkachse der Schließklappe und die Schwenkachse des Hebels 20. Das Bedienrad 30 ist um ein Lager 32 verdrehbar am Gehäuse des Luftausströmers gelagert und weist einen vorderen Abschnitt auf, der zum Verschwenken des Bedienrads 30 dient. Der vordere Abschnitt befindet sich in der Darstellung von Fig. 1 auf der linken Seite. Der vordere Abschnitt kann mit weiteren Elementen versehen sein, um einen Verstellabschnitt auszubilden. Zudem kann der Verstellabschnitt beleuchtbar sein. Ein Verdrehen des Bedienrads 30 um die Drehachse, die durch das Lager 32 verläuft, führt über die Koppelstange 10 zu einem entsprechenden Verschwenken des Hebels 20.

Der Luftausströmer ist an eine Belüftungseinrichtung, wie z. B. eine Klimaanlage anschließbar. Über die Schließklappe lässt sich die Menge der zugeführten Luft steuern. Hierzu weisen das Bedienrad 30 und der Hebel 20 Kugelgelenklager 40 auf, die zur Aufnahme von Lagerkugeln 16 der Koppelstange 10 ausgebildet sind. Die Koppelstange 10 weist an ihren gegenüberliegenden Endabschnitten Lageranordnungen mit einem ersten Verbindungsabschnitt 12 und einem zweiten Verbindungsabschnitt 14 auf. In dem gezeigten Ausführungsbeispiel weist die Koppelstange 10 zwei Lageranordnungen mit jeweils einer Lageranordnung auf, die einen Verbindungsabschnitt aufweist. In weiteren nicht dargestellten Ausführungsformen kann eine Lageranordnung auch zwei Verbindungsabschnitte aufweisen.

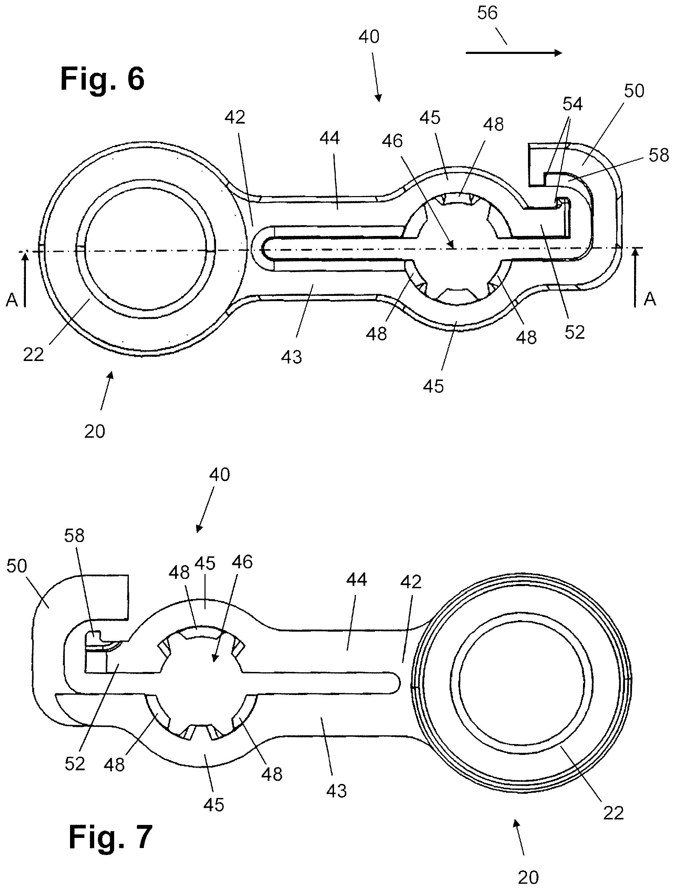

Über den ersten Verbindungsabschnitt 12 ist die Koppelstange 10 mit dem Kugelgelenklager 40 des Hebels 20 verbunden. Über den zweiten Verbindungsabschnitt 14 ist die Koppelstange 10 mit dem Kugelgelenklager 40 des Bedienrads 30 verbunden. Ein Verdrehen des Bedienrads 30 führt daher zu einem Verschwenken der Schließklappe, die mit dem Hebel 20 verbunden ist. Fig. 1 zeigt die Anordnung 100 in einer ersten Stellung, wobei ein Verdrehen des Bedienrads 30 um das Lager 32 im Uhrzeigersinn erfolgen kann. Dies führt zu einem Verschwenken des Hebels 20, wobei ein Verdrehen um das Lager 22 gegen den Uhrzeigersinn erfolgt. Die Kugelgelenklager 40 des Hebels 20 und Bedienrads 30 sind im Wesentlichen gleich aufgebaut und werden mit Bezug auf die Fig. 6 - 8 beschrieben.

Fig. 2 zeigt eine Seitenansicht der Anordnung 100 von Fig. 1. Die Koppelstange 10 weist in dem ersten Verbindungsabschnitt 12 und dem zweiten Verbindungsabschnitt 14 die Lagerkugeln 16 auf, die in Lagerstellen 46 der Kugelgelenklager 40 aufgenommen sind. Von den Lagerkugeln 16 stehen Erweiterungen in Form von Pilzköpfen 18 ab, die eine Sicherung gegen ein ungewolltes Ausrasten bereitstellen

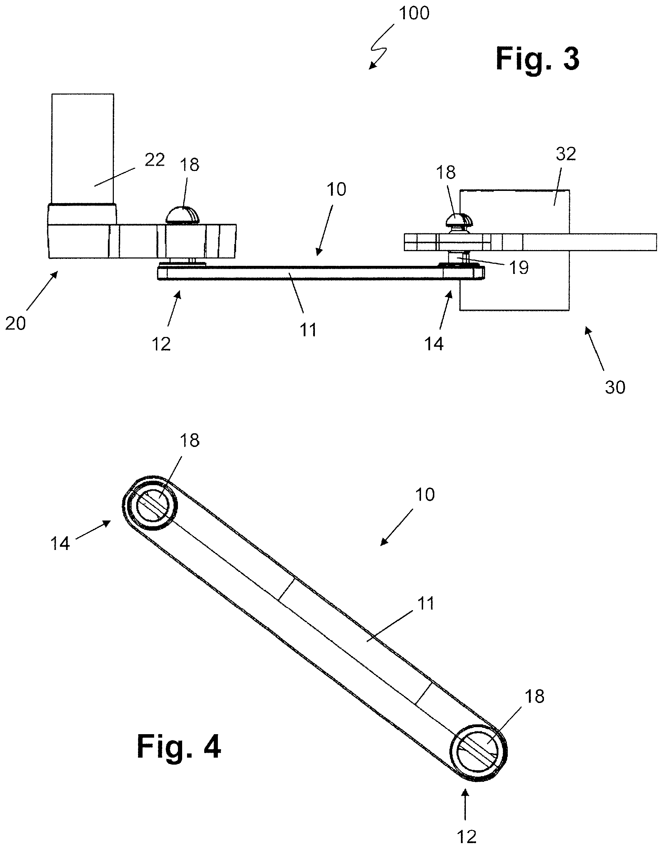

Fig. 3 zeigt eine Draufsicht der Anordnung 100 von Fig. 1. Die Lagerkugeln 16 sind über Zapfen 19 mit den Verbindungsstellen 12 und 14 verbunden. Zwischen der flachen Unterseite des Pilzkopfs 18 und den Lagerkugeln 18 besteht ein weiterer Abstand. Durch die Pilzköpfe 18 und deren Sicherung gegen ein Ausrasten ist es möglich, einen Winkelausgleich bei nicht koaxial gelagerten Drehachsen des Hebels 20 und des Bedienrads 30 bereitzustellen, ohne dass es zu einem Ausrasten kommt. Beispielsweise können der erste Verbindungsabschnitt 12 und der zweite Verbindungsabschnitt 14 nicht wie in Fig. 3 gezeigt, auf einer orthogonal zu einer durch die Drehachse des Lagers 22 verlaufenden Achse liegen, sondern in einer Ebene, die unter einem Winkel von ≤ oder ≥ 90° zur Drehachse durch das Lager 22 verläuft. Die Pilzköpfe 18 verhindern bei einer solchen Anordnung beim Verschwenken der Koppelstange 10 ein Ausrasten.

Fig. 4 zeigt eine schematische Darstellung der Koppelstange 10 der Anordnung 100. Die Koppelstange 10 weist einen Steg 11 auf, an dessen entgegengesetzten Enden der erste Verbindungsabschnitt 12 und der zweite Verbindungsabschnitt 14 angeordnet sind. Jeder der Verbindungsabschnitte 12 und 14 weist einen Zapfen 19 auf, an dem eine Lagerkugel 16 angeordnet ist. An den Lagerkugeln 16 ist jeweils beabstandet ein Pilzkopf 18 angeordnet.

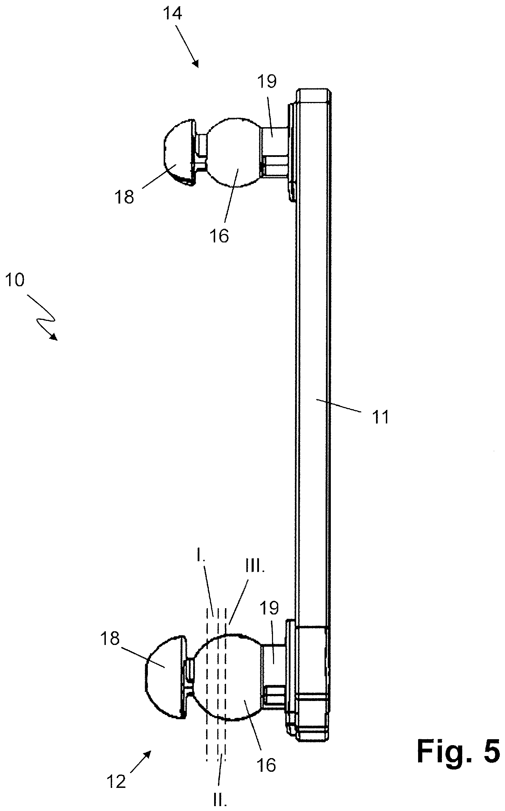

Fig. 5 zeigt eine Seitenansicht der Koppelstange 10. Die Lagerkugeln 16 sind so ausgebildet, dass diese drei Abschnitte aufweisen. Hierzu weisen die Lagerkugeln 16 eine entsprechende Kontur auf. Die Kontur der beiden Lagerkugeln 16 im Zusammenspiel verhindert ein Abkippen der Koppelstange 10 entgegen des Schwerkrafteinflusses und bietet zudem eine kontrollierte axiale Zentrierung zwischen den beiden Lagerstellen im ersten Verbindungsabschnitt 12 und im zweiten Verbindungsabschnitt 14. Die Kontur der Lagerkugeln 16 stellt einen Übergang zwischen steigenden Lagerstellendurchmessern bereit. In der neutralen Lagerstellung wird der ideale Lagerstellendurchmesser im ersten Abschnitt I. bereitgestellt. Bei steigendem abweichenden Winkel der Lachachsen durch die Zapfen 19 zueinander steigt der Lagerstellendurchmesser im zweiten Abschnitt II. kontinuierlich an und verspannt die Koppelstange 10 mit zentrierender Wirkung. Bei maximalem Winkel zwischen den Lagerachsen wird der größte Lagerstellendurchmesser im dritten Abschnitt III. bereitgestellt. Die Ausrichtung der Koppelstange 10 bleibt daher in sämtlichen Stellungen der Koppelstange 10 und Positionen des Bedienrads 30 sowie des Hebels 20 gleich.

Fig. 6 zeigt eine schematische Darstellung des Hebels 20 der Anordnung 100. Das Kugelgelenklager 40 weist eine Basis 42 auf. Die Basis 42 bildet die Ausgangsstelle und den Anbindungspunkt an beispielsweise den Hebel 20. Anstelle der in Fig. 6 gezeigten Anwendung könnte eine Basis 42 auch anderweitig ausgebildet sein. Eine Basis 42 ergibt sich jedoch stets, da die von der Basis 42 sich erstreckenden Arme 43, 44 in irgendeiner Form an einem weiteren Bauteil angebunden sein müssen. Die Arme 43, 44 erstrecken sich von der Basis 42 in einem ersten Abschnitt parallel zueinander und gehen dann in einen Abschnitt mit einer Ausbuchtung 45 über. Zwischen den gegenüberliegenden Ausbuchtungen 45 ist eine Lagerstelle 46 definiert. Die Lagerstelle 46 dient zur Aufnahme einer Lagerkugel 16 der Koppelstange 10. Auf den gegenüberliegenden Innenseiten der Ausbuchtungen 45 befinden sich drei Paare gegenüberliegender Lagerflächen 48, die durch Erhebungen an den Innenseiten der Ausbuchtungen 45 ausgebildet sind. Über die gegenüberliegenden Lagerflächen 48 wird eine Sechspunktlagerung einer Lagerkugel 16 bereitgestellt. Die Erhebungen weisen Schrägen auf, sodass bereits hierüber ein Toleranzausgleich für die Lagerkugel 16 bereitgestellt wird. Im Weiteren ermöglicht dies auch einen Toleranzausgleich für das Kugelgelenklager 40.

Von der Ausbuchtung 45 des ersten Arms 43 erstreckt sich ein Bügel 50, der einen Armabschnitt 52 des zweiten Arms 44 umgibt. Der Bügel 50 ist beabstandet zu dem Armabschnitt 52 ausgebildet. Die Arme 43 und 44 sind gefedert gelagert, sodass beim Einbringen einer Lagerkugel in die Lagerstelle 46 die Arme 43, 44, vor allem im Bereich der Ausbuchtungen 45, auseinandergedrückt werden können, um in der Lagerstelle 46 zwischen den Lagerflächen 48 eine Lagerkugel 16 aufzunehmen. Der Abstand zwischen dem Bügel 50 und dem Armabschnitt 52 erlaubt dabei ein Aufspreizen der Arme 43, 44 bis zu einem gewissen Maß. Der Abstand zwischen dem Armabschnitt 52 und dem Bügel 50 in orthogonal zu einer Gleitrichtung 56 verlaufenden Richtung gibt auch vor, wie groß die in der Lagerstelle 46 aufgenommen Lagerkugel maximal sein darf.

Zwischen dem Bügel 50 und dem Armabschnitt 52 ist zudem ein erster Hinterschnitt 54 durch entsprechende Flächen an dem Bügel 50 und dem Armabschnitt 52 ausgebildet. Bei der Aufbiegung der Arme 43 und 44 während des Einbringens der Lagerkugel 16 verhindert der erste Hinterschnitt 54 ein Auseinandergleiten, da die gegenüberliegenden Flächen des ersten Hinterschnitts 54 am Arm 50 und am Armabschnitt 52 in Anlage kommen können. Der erste Hinterschnitt 54 verhindert ein Auseinandergleiten in Gleitrichtung 56.

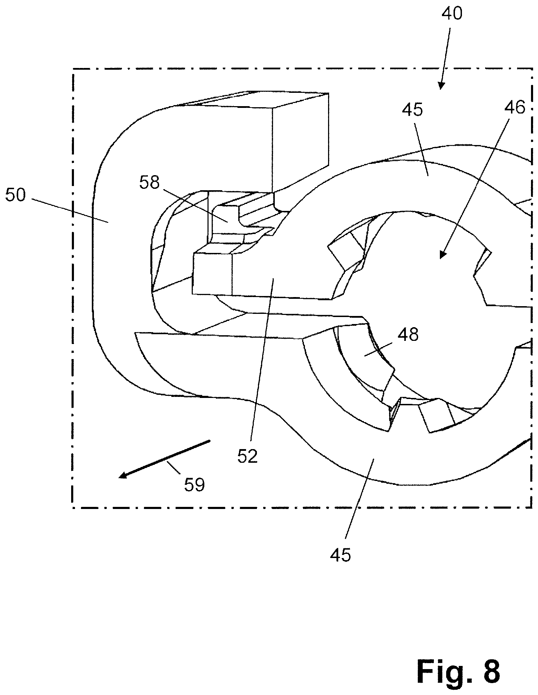

Zusätzlich weisen der Bügel 50 und der Armabschnitt 52 einen zweiten Hinterschnitt 58 auf, der durch ebenfalls gegenüberliegende Flächen am Bügel 50 und am Armabschnitt 52 ausgebildet ist (siehe hierzu Fig. 7, 8). Der zweite Hinterschnitt 58 ist in Montagerichtung 59 ausgerichtet. Der zweite Hinterschnitt 58 wird durch gegenüberliegende Flächen am Bügel 50 am Armabschnitt 52 gebildet. Bei der Montage während des Einbringens der Lagerkugel 16 wird durch die gegenüberliegenden Flächen des zweiten Hinterschnitts 58 in Montagerichtung ein Abgleiten der Arme 43, 44 bzw. des Armabschnitts 52 und des Bügels 50 verhindert, wodurch eine Montage ohne zusätzliches Abstützen der beiden Arme 43, 44 gewährleistet wird.

Fig. 7 zeigt eine weitere Darstellung des Hebels 20 der Anordnung 100. Fig. 7 zeigt die Rückansicht der Darstellung von Fig. 6. Die Fläche des zweiten Hinterschnitts 58 am Armabschnitt 52 kann beim Einbringen der Lagerkugel 16 in Anlage mit der Fläche des zweiten Hinterschnitts 58 am Bügel 50 kommen (siehe Fig. 6). Hierüber wird das Auseinandergleiten auf ein maximales Maß beschränkt. In einer nicht ausgelenkten Stellung weisen die gegenüberliegenden Flächen am Armabschnitt 52 und am Bügel 50 des zweiten Hinterschnitts 58 einen Abstand zueinander auf. Gleiches gilt für die gegenüberliegenden Flächen des ersten Hinterschnitts 54 am Armabschnitt 52 und am Bügel 50.

Das Kugelgelenklager 40 bietet damit einen Toleranzausgleich in verschiedenen Richtungen und verhindert zudem ein Spiel in den Lagerstellen 46.

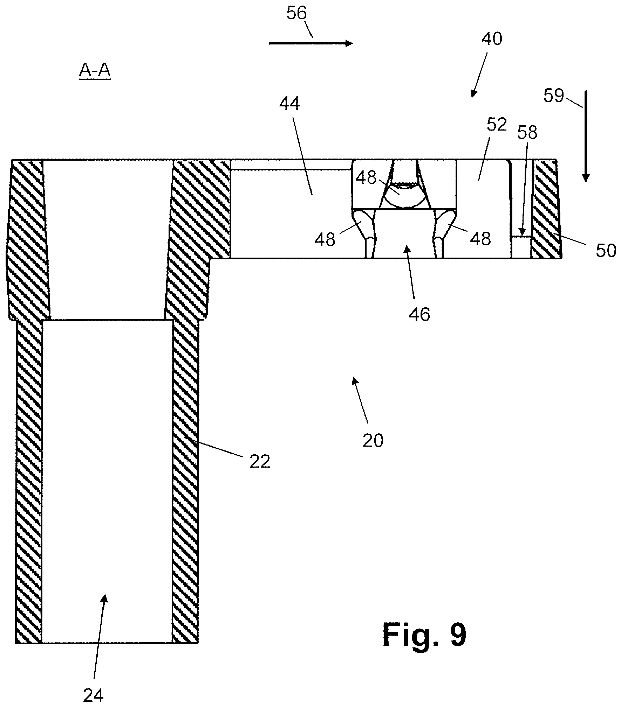

Fig. 8 zeigt eine vergrößerte Darstellung des Kugelgelenklagers 40 des Hebels 20. Die Darstellung zeigt die Ausbildung des zweiten Hinterschnitts 58 am Armabschnitt 52 und die Ausbildung der Erhebungen zur Ausbildung der Lagerflächen 48. Die Lagerflächen 48 sind als schräg verlaufende Lager ausgebildet (siehe hierzu auch Fig. 9) und weisen eine Krümmung zur Lagerung der Lagerkugel 16 auf.

Beim Einsetzen der Lagerkugel 16 wird erst der Pilzkopf 18 in Montagerichtung 59 in die Lagerstelle 46 eingebracht. Die abgerundete Ausführung des Pilzkopfs 18 am äußeren Ende erleichtert das Einbringen in die Lagerstelle 46 und das Aufweiten der Lagerstelle 46, wobei der Armabschnitt 52 soweit aufgebogen wird, bis die gegenüberliegenden Flächen des ersten Hinterschnitts 54 aneinander anliegen. Nach dem maximalen Aufweiten der Lagerstelle 46 kann der Pilzkopf 18 aus der Lagerstelle 46 wieder heraustreten. Während der Pilzkopf 18 mit seiner abgerundeten Oberseite die Lagerstelle aufweitet, gelangt bereits die Lagerkugel 16 in die Lagerstelle 46. Nach dem Austreten des Pilzkopfs 18 ist daher die Lagerkugel 16 innerhalb der Lagerstelle 46 zwischen den Lagerflächen 48 aufgenommen. Während des Einbringens des Pilzkopfs 18 und der Lagerkugel 16 gelangen die gegenüberliegenden Flächen am Armabschnitt 52 und Bügel 50 des zweiten Hinterschnitts 58 in Anlage und verhindern ein Abgleiten der Arme 43, 44. Nachdem der Pilzkopf 18 aus der Lagerstelle 46 wieder ausgetreten ist, liegt die flache Unterseite des Pilzkopfs 18 der Lagerstelle 46 gegenüber. Die flache Unterseite verhindert ein Ausrasten der Lagerkugel 16. Die Lagerkugel 16 ist über die drei Paare gegenüberliegender Lagerflächen 48 sicher innerhalb der Lagerstelle 46 aufgenommen und kann nicht ausrasten, da der Pilzkopf 18 ein Ausrasten verhindert. Die gefederte Lagerung der Arme 43, 44 bietet zudem einen Spielausgleich und ermöglicht die Einhaltung größerer Toleranzen bei der Fertigung der Koppelstange 10 und der Kugelgelenklager 40. Häufige Werkzeugänderungen von Spritzgießwerkzeugen sind daher nicht erforderlich und vereinfachen den Herstellungsprozess. Insbesondere ergeben sich hierdurch enorme Kosteneinsparungen.

Fig. 9 zeigt eine Schnittansicht des Hebels 20 entlang der Schnittebene A-A von Fig. 6. Das Lager 22 des Hebels 20 weist eine Öffnung 24 auf. Über die Öffnung 24 wird ein Zapfen einer Schließklappe aufgenommen und mit dem Hebel 20 arretiert, sodass ein Verschwenken des Hebels 20 auch ein Verschwenken der Schließklappe bewirkt.

Die Darstellung von Fig. 9 zeigt jeweils eine Lagerfläche 48 der drei Paare gegenüberliegenden Lagerflächen. Der Darstellung kann entnommen werden, dass über die Sechspunktlagerung im Zusammenspiel mit der gefederten Ausführung der Arme 43, 44 ein Toleranzausgleich gegeben ist, weil Lagerkugeln 16 mit verschiedenen Durchmessern stets mittig in der Lagerstelle 46 aufgenommen werden und die gefederten Arme 43, 44 die Lagerkugeln mittig halten.

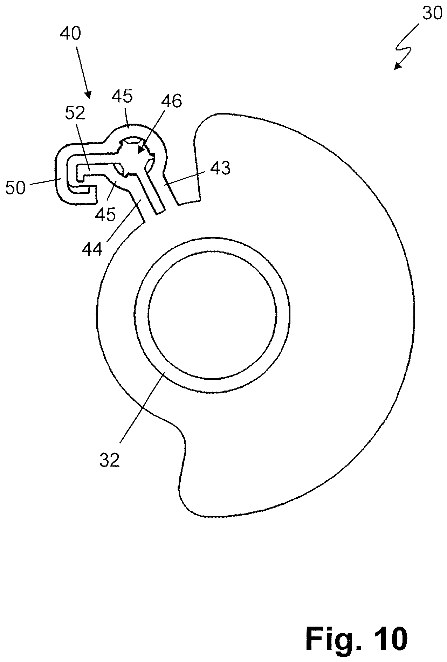

Fig. 10 zeigt eine schematische Darstellung des Bedienrads 30 der Anordnung 100. Das Kugelgelenklager 40 des Bedienrads 30 unterscheidet sich von dem Kugelgelenklager 40 des Hebels 20 durch die Ausrichtung des Armabschnitts 52 und des Bügels 50 sowie der konkreten Ausführung der Ausbuchtungen 45. Die Ausbuchtung 45 des Arms 43 erstreckt sich um ein größeres Maß um die Lagerstelle 46 als die Ausbuchtung 45 des zweiten Arms 44. Die Wirkungsweise des Kugelgelenklagers 40 ist jedoch identisch zu dem Kugelgelenklager 40 des Hebels 20, sodass ebenso ein Spielausgleich und ein Toleranzausgleich bereitgestellt werden.

Sämtliche Komponenten, Koppelstange 10, Hebel 20 und Bedienrad 30, können in einem Spritzgussprozess in hoher Stückzahl kostengünstig hergestellt werden. Die Verwendung von Kunststoffen für die Ausbildung der Komponenten ermöglicht zudem die gefederte Ausführung der Arme 43, 44 sowie des Bügels 50 und des Abschnitts 53.

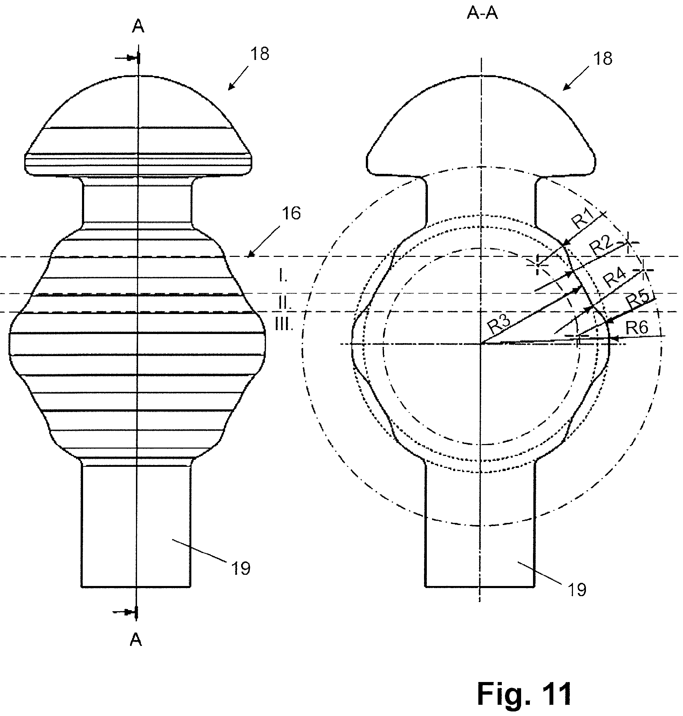

Fig. 11 zeigt die Darstellung einer Lagerkugel 16 mit Zapfen 19 und Pilzkopf 18 in einer Seitenansicht und einen Schnitt durch die Lagerkugel 16, den Zapfen 19 und den Pilzkopf 18.

Die Lagerkugel 16 weist, wie in Bezug auf Fig. 5 bereits angegeben, drei Abschnitte auf. Der erste Abschnitt I. stellt den idealen Lagerstellendurchmesser in einer Neutralstellung der Koppelstange 10 dar. Im ersten Abschnitt I. weist die Lagerkugel 16 einen im Wesentlichen linearen Anstieg auf. Im zweiten Abschnitt II. nimmt der Lagerstellendurchmesser zu, wobei ebenfalls ein im Wesentlichen linearer Anstieg vorhanden ist. Schließlich weist der dritte Abschnitt III. ebenfalls einen vergrößerten Lagerstellendurchmesser auf.

Die Schnittdarstellung auf der rechten Seite zeigt die Ausbildung der Übergänge und der einzelnen Abschnitte I., II. und III. Der Radius R6 gibt den Radius der Lagerkugel 16 ausgehend vom Mittelpunkt der Kugel 16 an. Der Radius R3 gibt den Radius im Übergang zwischen dem ersten Abschnitt I. und dem II. an. Die Kontur der Lagerkugel 16 verläuft dabei im Wesentlichen zwischen den Radien R3 und R1 bzw. R5. Die Mittelpunkte für die Radien R1 und R5 liegen auf einem gedachten Kreis, der in Fig. 11 durch den schematisch angedeuteten kleinen Kreis (Strichpunktlinie) dargestellt ist. Die Mittelpunkte der Radien R2 und R4 liegen auf einem gedachten Kreis, der in Fig. 11 die Lagerkugel 16 von außen umgibt (Strichpunktlinie). Die Kontur der Lagerkugel 16 verläuft zwischen den beiden schematisch angedeuteten Kreisen, die als gepunktete Linien ausgeführt sind.

Die Kontur der Lagerkugel 16 unterscheidet sich von herkömmlichen Lagerkugeln darin, dass kein homogener gleichbleibender Verlauf über die komplette Oberfläche der Lagerkugel bereitgestellt wird. Die einzelnen Abschnitte I., II., III. ermöglichen einen Anstieg der Lagerstellendurchmesser bei einer Ausrichtung der Koppelstange 10, wobei es zu keinem Verkippen kommt. Die Kontur hierfür ist maßgeblich und bildet im Wesentlichen eine "Rinne" für die Lagerstelle 46 der Kugelgelenklager 40. Sobald die Lagerstelle 46 außerhalb der optimalen Position im ersten Abschnitt I. gelangt, wird über die vergrößerten Lagerstellendurchmesser eine Ausrichtung der Koppelstange 10 bewirkt.

Die Lagerkugel 16 ist so ausgebildet, dass die Kontur sowohl zwischen einer durch die Lagerkugel 16 verlaufenden Mittelebene und den Pilzkopf 18 als auch zwischen dieser Mittelebene und den Zapfen 19 ausgebildet ist. Im Weiteren erstreckt sich über den ersten Abschnitt I. ein weiterer zweiter Abschnitt II., der dazu führt, dass auch bei einer Auslenkung der Lagerstelle 46 nach oben eine Ausrichtung der Koppelstange 10 erzielt wird. Die Lagerkugel 16 ermöglicht daher in beide Richtungen eine Ausrichtung und Zentrierung und wirkt einem Abkippen aufgrund des Schwerkrafteinflusses entgegen.

Die Kontur der Lagerkugel 16 lässt sich durch Kunststoff einfach ausbilden. Die durch die Kontur erzielbaren Vorteile sind neben der Ausrichtung der Koppelstange 10 gegen ein Abkippen und einer automatischen Zentrierung in den Lagerstellen 46 darin zu sehen, dass es zu keiner Blockade kommen kann und damit die Funktion einer Schließklappensteuerung aufrechterhalten wird.

### Bezugszeichenliste

- 10: Koppelstange
- 11: Steg
- 12: erster Verbindungsabschnitt
- 14: zweiter Verbindungsabschnitt
- 16: Lagerkugel
- 18: Pilzkopf
- 19: Zapfen
- 20: Hebel
- 22: Lager
- 24: Öffnung
- 30: Bedienrad
- 32: Lager
- 40: Kugelgelenklager
- 42: Basis
- 43: Arm
- 44: Arm
- 45: Ausbuchtung
- 46: Lagerstelle
- 48: Lagerfläche
- 50: Bügel
- 52: Armabschnitt
- 54: erster Hinterschnitt
- 56: Gleitrichtung
- 58: zweiter Hinterschnitt
- 59: Montagerichtung
- 100: Anordnung

## Patentansprüche

1. Lageranordnung mit mindestens einem ersten Verbindungsabschnitt (12), wobei der mindestens eine erste Verbindungsabschnitt (12; 14) eine Lagerkugel (16) aufweist und sich von der Lagerkugel (16) eine Erweiterung erstreckt, die auf der der Lagerkugel (16) zugewandten Seite flach und auf der gegenüberliegenden, der Lagerkugel (16) abgewandten Seite abgerundet ausgebildet ist, und wobei die Lagerkugel (16) zwischen einer die Lagerkugel (16) schneidenden Mittelebene und einem gegenüberliegenden Ende der Lagerkugel (16) mindestens drei Abschnitte (I., II., III.) aufweist, welche einen zur Mittelebene hin zunehmenden Durchmesser aufweisen, wobei die mindestens drei Abschnitte (I., II., III.) einen nicht homogenen Verlauf über die komplette Oberfläche der Lagerkugel bereitstellen, wobei
- ein erster Abschnitt (I.) in der neutralen Lagerstellung einen idealen Lagerstellendurchmesser bereitstellt,
- ein zweiter Abschnitt (II.) einen kontinuierlich ansteigenden Lagerstellendurchmesser aufweist,
- ein dritter Abschnitt (III.) den größten Lagerstellendurchmesser aufweist, und
- die Abschnitte (I., II, III.) Übergänge mit einer Krümmung oder einem Radius aufweisen, so dass
- der Verlauf der Abschnitte (I., II., III.) eine Rinne bildet.

2. Lageranordnung nach Anspruch 1, wobei zwischen der Lagerkugel (16) und der Erweiterung ein Abstand besteht.

3. Lageranordnung nach Anspruch 1 oder 2, wobei die Erweiterung als Pilzkopf (18) ausgebildet ist.

4. Anordnung mit einer Lageranordnung nach einem der Ansprüche 1 bis 3 und mindestens einem Kugelgelenklager (40) zur Aufnahme einer Lagerkugel (16), welche zwei parallel zueinander verlaufende und an einer Basis (42) gefedert gelagerte Arme (43, 44) aufweist, wobei die Arme (43, 44) jeweils eine Ausbuchtung (45) aufweisen, die gemeinsam eine Lagerstelle (46) für eine Lagerkugel (16) ausbilden, wobei die Lagerstelle (46) mindestens zwei Paare gegenüberliegender Lagerflächen aufweist, die an den Armen (43, 44) im Bereich der Ausbuchtungen (45) angeordnet sind, und wobei nach der Lagerstelle (46), abseits der Basis (42), ein Arm (43) einen Bügel (50) aufweist, der einen gegenüberliegenden Armabschnitt (52) des anderen Arms (44) umgibt, wobei die mindestens eine Lagerkugel (16) der Lageranordnung in der Lagerstelle (46) des Kugelgelenklagers (40) aufgenommen ist und die Lagerkugel (16) an den Lagerflächen (48) der Lagerstelle (46) anliegt.

5. Anordnung nach Anspruch 4, aufweisend eine Koppelstange (10) und mindestens ein Bedienrad (30) und/oder einen Hebel (20), wobei
- die Koppelstange (10) mindestens eine Lageranordnung und das Bedienrad (30) und/oder der Hebel (20) mindestens ein Kugelgelenklager (40), oder
- die Koppelstange (10) mindestens ein Kugelgelenklager (40) und das Bedienrad (30) und/oder der Hebel (20) mindestens eine Lageranordnung aufweisen.

## Claims

1. Bearing arrangement with at least one first connecting section (12), wherein the at least one first connecting section (12; 14) has a bearing ball (16) and extending from the bearing ball (16) is a widening which is formed to be flat on the side facing towards the bearing ball (16) and rounded on the opposite side facing away from the bearing ball (16), and wherein the bearing ball (16) has between a centre plane, which intersects the bearing ball (16), and an opposite end of the bearing ball (16) at least three sections (I., II., III.), which have a diameter increasing towards the centre plane, wherein the at least three sections (I., II., III.) provide a non-homogenous course over the complete surface of the bearing ball, wherein
- a first section (I.) in the neutral bearing setting provides an ideal bearing location diameter,
- a second section (II.) has a continuously increasing bearing location diameter,
- a third section (III.) has the largest bearing location diameter and
- the sections (I., II., III.) have transitions with a curvature or a radius so that
- the course of the sections (I., II., III.) forms a channel.

2. Bearing arrangement according to claim 1, wherein a spacing is present between the bearing ball (16) and the widening.

3. Bearing arrangement according to claim 1 or 2, wherein the widening is formed as a mushroom head (18).

4. Arrangement with a bearing arrangement according to any one of claims 1 to 3 and at least one ball joint bearing (40) for reception of a bearing ball (16) which comprises two arms (43, 44) extending parallelly to one another and resiliently mounted on a base (42), wherein the arms (43, 44) each have a bulge (45) and the bulges together form a bearing location (46) for a bearing ball (16), wherein the bearing location (46) has at least two pairs of opposite bearing surfaces (48), which are arranged at the arms (43, 44) in the region of the bulges (45), and wherein after the bearing location (46) one arm (43) has remote from the base (42) a bow (50) which encloses an opposite arm section (52) of the other arm (44), wherein the at least one bearing ball (16) of the bearing arrangement is received in the bearing location (46) of the ball joint bearing (40) and the bearing ball (16) bears against the bearing surfaces (48) of the bearing location.

5. Arrangement according to claim 4, comprising a coupling rod (10) and at least one control wheel (30) and/or lever (20), wherein
- the coupling rod (10) comprises at least one bearing arrangement, and the control wheel (30) and/or the lever (20) comprises or comprise at least one ball joint bearing (40)
or
- the coupling rod (10) comprises at least one ball joint bearing (40), and the control wheel (30) and/or the lever (20) comprises or comprise at least one bearing arrangement.

## Revendications

1. Ensemble de paliers comprenant au moins une première section de liaison (12), où la au moins une première section de liaison (12 ; 14) comporte une bille de palier (16) à partir de laquelle s'étend un élargissement, lequel est plat sur le côté tourné vers la bille de palier (16) et arrondi sur le côté opposé à la bille de palier (16), la bille de palier (16) comportant entre un plan médian coupant la bille de palier (16) et une extrémité opposée de la bille de palier (16) au moins trois sections (I., II., III.) qui présentent un diamètre croissant en direction du plan médian. Les au moins trois sections (I., II., III.) présentent un tracé non homogène sur l'intégralité de la surface de la bille de palier, où
- une première section (I.) dans la position de palier neutre procure un diamètre de réglage de palier idéal,
- une deuxième section (II.) présente un diamètre de réglage de palier croissant continu,
- une troisième section (III.) présente le plus grand diamètre de réglage de palier, et
- les sections (I., II., III.) présentent des transitions avec une courbure ou un rayon, de sorte que
- le tracé des sections (I., II., III.) forme un conduit.

2. Ensemble de paliers selon la revendication 1, pour lequel il existe un certain jeu entre la bille de palier (16) et l'extension.

3. Ensemble de paliers selon la revendication 1 ou 2, où l'extension est conçue en forme de champignon (18).

4. Dispositif comprenant un ensemble de paliers selon l'une des revendications 1 à 3 et au moins un palier à rotule (40) destiné à recevoir une bille de palier (16), lequel présente deux bras (43, 44) parallèles l'un à l'autre et montés sur ressort sur une base (42). Lesdits bras (43, 44) comportent chacun un bombement (45) qui forment ensemble un point d'appui (46) pour une bille de palier (16), où le point d'appui (46) présente au moins deux paires de surfaces d'appui opposées disposées sur les bras (43, 44) dans la zone des bombements (45), et où, après le point d'appui (46), à l'écart de la base (42), un bras (43) comporte un étrier (50) entourant une section de bras (52) opposée de l'autre bras (44), où la au moins une bille de palier (16) de l'ensemble de paliers est logée dans le point d'appui (46) du palier à rotule (40) et la bille de palier (16) repose contre les surfaces d'appui (48) du point d'appui (46).

5. Dispositif selon la revendication 4, comprenant une barre de liaison (10) et au moins une molette de commande (30) et/ou un levier (20), où
- où la barre de liaison (10) comporte au moins un ensemble de paliers et la molette de commande (30) et/ou le levier (20) comporte au moins un palier à rotule (40), ou
- la barre de liaison (10) comporte au moins un palier à rotule (40) et la molette de commande (30) et/ou le levier (20) comporte au moins un ensemble de paliers.
